# EUROPEAN PATENT APPLICATION

(11) **EP 4 757 431 A1**
(43) Date of publication of application: **10.06.2026**
(21) Application number: 24858252.0
(22) Date of filing: 07.08.2024
(51) Int. Cl.: H04W 52/02

(54) **COMMUNICATION METHOD AND COMMUNICATION APPARATUS**

(30) Priority: 31.08.2023 CN 202311135687
(71) Applicant: HUAWEI TECHNOLOGIES CO., LTD., Shenzhen 518129 (CN)
(72) Inventor: RUAN, Wei, Shenzhen, Guangdong 518129 (CN); MA, Yunsi, Shenzhen, Guangdong 518129 (CN)
(74) Representative: Pfenning, Meinig & Partner mbB
(86) International application number: PCT/CN2024/110445
(87) International publication number: WO 2025/044709

(57) **Abstract**

This application provides a communication method and a communication apparatus. The method includes: receiving first information, where the first information indicates a first time period, and the first time period is time available for high power transmission; and entering a high power mode in the first time period when low latency traffic is present; or entering a low power mode or a high power mode in the first time period when low latency traffic is absent. In this solution, a working mode of a terminal device may be switched between the high power mode and the low power mode, so that the terminal device is not in the high power mode for long time, to help reduce power consumption of the terminal device.

## Description

### CROSS-REFERENCE TO RELATED APPLICATIONS

This application claims priority to Chinese Patent Application No. 202311135687.5, filed on August 31, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

Reducing power consumption of a device is one of main objectives of a next generation wireless fidelity (wireless fidelity, Wi-Fi) protocol (that is, Wi-Fi 8). However, in a current low latency traffic preemption transmission solution, a terminal device is always in a high power mode, to detect whether the terminal device may perform preemption transmission of an uplink low latency traffic frame or receive a downlink low latency traffic frame. In this manner, power consumption of the terminal device is high.

How to reduce power consumption of the terminal device is to be resolved.

### SUMMARY

Embodiments of this application provide a communication method and a communication apparatus, to reduce power consumption of a terminal device.

According to a first aspect, an embodiment of this application provides a communication method. The method may be performed by a terminal device or a module (for example, a chip) in the terminal device. The method includes: receiving first information, where the first information indicates a first time period, and the first time period is time available for high power transmission; and entering a high power mode in the first time period when low latency traffic is present; or entering a low power mode or a high power mode in the first time period when low latency traffic is absent.

In the foregoing solution, a working mode of a terminal device may be switched between the high power mode and the low power mode, so that the terminal device is not in the high power mode for long time, to help reduce power consumption of the terminal device.

In a possible implementation method, the method further includes: entering the high power mode in a second time period after the first time period ends.

In a possible implementation method, the method further includes: entering the low power mode when a non-low latency traffic frame is detected in the second time period.

In a possible implementation method, the method further includes: entering the high power mode after transmission of the non-low latency traffic frame is completed.

In a possible implementation method, the method further includes: maintaining the high power mode when a trigger frame is detected in the second time period and the low latency traffic is present, where the trigger frame indicates an uplink transmission resource.

In a possible implementation method, the method further includes: detecting a trigger frame in the second time period, where the trigger frame indicates an uplink transmission resource; and entering the low power mode for first duration when the low latency traffic is present, but the uplink transmission resource indicated by the trigger frame does not include an uplink transmission resource of the terminal device and does not include an associated-user contention-based uplink transmission resource; or entering the low power mode for first duration when the low latency traffic is absent.

In a possible implementation method, the first duration is indicated by the trigger frame.

In a possible implementation method, the method further includes: determining the first duration based on at least one of transmission duration of uplink low latency traffic, an interframe space, and duration of an acknowledgment frame.

In a possible implementation method, after the entering the low power mode for the first duration, the method further includes: entering the high power mode and detecting a downlink low latency traffic frame.

In a possible implementation method, after the entering the high power mode and detecting the downlink low latency traffic frame, the method further includes: maintaining the high power mode when the downlink low latency traffic frame is detected and the downlink low latency traffic frame includes downlink low latency traffic of the terminal device; entering the low power mode when the downlink low latency traffic frame is detected and the downlink low latency traffic frame does not include downlink low latency traffic of the terminal device; or entering the low power mode when no downlink low latency traffic frame is detected.

In a possible implementation method, the method further includes: detecting a trigger frame in the second time period, where the trigger frame indicates an uplink transmission resource; and when the low latency traffic is present, but the uplink transmission resource indicated by the trigger frame does not include an uplink transmission resource of the terminal device and includes an associated-user contention-based uplink transmission resource, maintaining the high power mode and contending for use of the associated-user contention-based uplink transmission resource to transmit the low latency traffic.

In a possible implementation method, the method further includes: maintaining the high power mode when a downlink low latency traffic frame is detected in the second time period and the downlink low latency traffic frame includes downlink low latency traffic of the terminal device.

In a possible implementation method, the method further includes: entering the low power mode for second duration when a downlink low latency traffic frame is detected in the second time period and the downlink low latency traffic frame does not include downlink low latency traffic of the terminal device.

In a possible implementation method, the second duration is determined based on remaining transmission duration of the downlink low latency traffic frame and an interframe space.

In a possible implementation method, the method further includes: entering the high power mode before a non-low latency traffic frame arrives.

In a possible implementation method, the method further includes: maintaining the high power mode if the non-low latency traffic frame is detected and transmission duration of the non-low latency traffic frame is less than a first threshold.

In a possible implementation method, different downlink non-low latency traffic frames have equal duration.

In a possible implementation method, each downlink non-low latency traffic frame carries a count indication, and the count indication is used to determine a start moment of the first time period.

In a possible implementation method, the method further includes: when the low latency traffic is present, if a start moment of the first time period is unknown, entering the high power mode, detecting a non-low latency traffic frame, determining the start moment of the first time period based on the non-low latency traffic frame, and entering the low power mode or maintaining the high power mode; and entering the high power mode at the start moment of the first time period or before the start moment of the first time period.

In a possible implementation method, the method further includes: when the low latency traffic is present, if a start moment of the first time period is known, entering the low power mode, and entering the high power mode at the start moment of the first time period or before the start moment of the first time period.

In a possible implementation method, the method further includes: when the low latency traffic is present, entering the high power mode, and detecting a non-low latency traffic frame; after transmission of the non-low latency traffic frame is completed, preempting a channel to transmit a low latency traffic frame; and after receiving an acknowledgment frame for the low latency traffic frame, entering the low power mode.

According to a second aspect, an embodiment of this application provides a communication apparatus. The apparatus may be a terminal device, or may be a module (for example, a chip) in the terminal device. The apparatus has a function of implementing any one of the implementation methods of the first aspect. The function may be implemented by hardware, or may be implemented by hardware executing corresponding software. The hardware or the software includes one or more modules corresponding to the function.

According to a third aspect, an embodiment of this application provides a communication apparatus. The apparatus may be a network device, or may be a module (for example, a chip) in the network device. The apparatus has a function of implementing any one of the implementation methods of the fourth aspect. The function may be implemented by hardware, or may be implemented by hardware executing corresponding software. The hardware or the software includes one or more modules corresponding to the function.

According to a fourth aspect, an embodiment of this application provides a communication apparatus, including a unit or a means (means) configured to perform steps of any one of the implementation methods in the first aspect.

According to a fifth aspect, an embodiment of this application provides a communication apparatus, including a processor and an interface circuit. The processor is configured to communicate with another apparatus through the interface circuit, and perform any one of the implementation methods in the first aspect. There are one or more processors.

Optionally, the communication apparatus may further include a memory configured to store computer instructions. The memory is coupled to the processor, and the processor executes the computer instructions stored in the memory, so that the apparatus performs any one of the implementation methods in the first aspect.

According to a sixth aspect, an embodiment of this application further provides a computer program product. The computer program product includes a computer program or instructions. When the computer program or the instructions are run on a communication apparatus, any one of the implementation methods in the first aspect is performed.

According to a seventh aspect, an embodiment of this application further provides a computer-readable storage medium. The computer-readable storage medium stores instructions, and when the instructions are run on a communication apparatus, any one of the implementation methods in the first aspect is performed.

According to an eighth aspect, an embodiment of this application further provides a chip system, including: a processor, configured to perform any one of the implementation methods in the first aspect.

### BRIEF DESCRIPTION OF DRAWINGS

FIG. 1 is a diagram of an architecture of a communication system to which embodiments of this application are applied;
FIG. 2 is an example diagram of a preemption transmission method for low latency traffic in a single-user scenario according to an embodiment of this application;
FIG. 3 is a diagram of a communication method according to an embodiment of this application;
FIG. 4 is a diagram of an RPD solution;
FIG. 5 is another diagram of an RPD solution;
FIG. 6 is another diagram of an RPD solution;
FIG. 7 is a diagram of a low-power equal-interval preemption transmission solution;
FIG. 8 is another diagram of a low-power equal-interval preemption transmission solution;
FIG. 9 is another diagram of a low-power equal-interval preemption transmission solution;
FIG. 10 is a diagram of a low-power unequal-interval preemption transmission solution;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

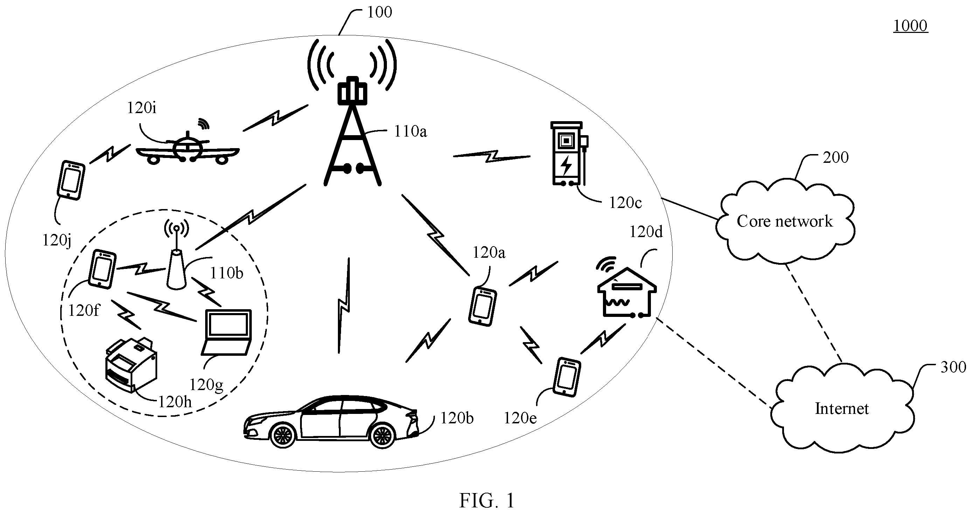

FIG. 1 is a diagram of an architecture of a communication system to which embodiments of this application are applied. The communication system 1000 shown in FIG. 1 includes a radio access network 100 and a core network 200. Optionally, the communication system 1000 further includes an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1 is merely a diagram. The communication system may further include other network devices, for example, may further include a wireless relay device and a wireless backhaul device, which are not shown in FIG. 1.

The network device is an access device used by the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access point (access point, AP) in a wireless fidelity (wireless fidelity, Wi-Fi) system, or the like, or may be a module or a unit that completes some functions of the base station, for example, may be a central unit (central unit, CU), a distributed unit (distributed unit, DU), or a radio unit (radio unit, RU). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, a station (station, STA), and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer with a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other according to a radio air interface protocol. Certainly, 110a and 120i may alternatively communicate with each other according to an interface protocol between network devices. In this case, compared with 110a, 120i is also a network device. Therefore, the network device and the terminal device may be collectively referred to as a communication apparatus. 110a and 110b in FIG. 1 may be referred to as a communication apparatus with a function of a network device, and 120a to 120j in FIG. 1 may be referred to as a communication apparatus with a function of a terminal device.

Communication may be performed between a network device and a terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

For ease of description, in this application, a STA and an AP are used as examples of the terminal device and the network device respectively for description subsequently. In other words, the STA and the AP that appear subsequently may be replaced with the terminal device and the network device respectively.

In embodiments of this application, a non-AP device used to transmit low latency traffic (low latency traffic, LLT) is referred to as an LLT STA, and a non-AP device used to transmit non-low latency traffic is referred to as a non-LLT STA.

A communication frame sent by the LLT STA to an AP carries data of uplink low latency traffic, and the communication frame may also be referred to as an uplink low latency traffic frame. A communication frame sent by an AP to the LLT STA carries data of downlink low latency traffic, and the communication frame may also be referred to as a downlink low latency traffic frame. For example, when the communication frame is a physical layer protocol data unit (physical protocol data unit, PPDU), the communication frame may also be represented as an LLT PPDU.

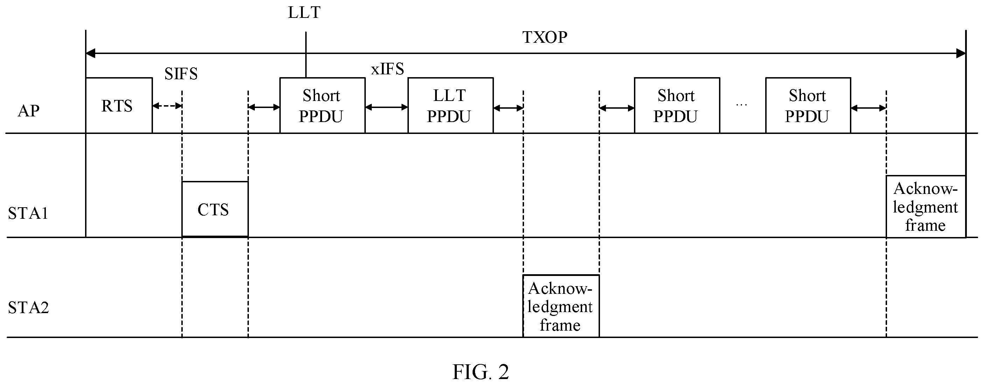

Reducing power consumption of a device is one of main objectives of a next generation Wi-Fi protocol (that is, Wi-Fi 8). FIG. 2 is an example diagram of a preemption transmission method for low latency traffic in a single-user scenario according to an embodiment of this application. A STA1 transmits only non-low latency traffic (non-LLT), and a STA2 transmits low latency traffic (LLT), that is, the STA1 is a non-LLT STA, and the STA2 is an LLT STA. In a transmit opportunity (transmit opportunity, TXOP) window, non-LLT data is transmitted between an AP and the STA1. In the TXOP, even if there is high-priority LLT data to be sent, the AP cannot transmit the LLT to the STA2 in time, and needs to wait until transmission of a non-LLT PPDU of the STA1 ends. Consequently, excessively long duration of the non-LLT PPDU of the STA1 causes a significant increase in an LLT transmission latency. To reduce the LLT transmission latency, the AP divides a long non-LLT PPDU of the STA1 into a plurality of short non-LLT PPDUs, that is, short PPDUs in FIG. 2, and a new interframe space xIFS is introduced, so that the STA2 is allowed to preempt a channel in the xIFS of the short non-LLT PPDU to transmit the LLT. As shown in FIG. 2, after buffering the LLT data, the AP suspends transmission of the short non-LLT PPDU to the STA1, and transmits an LLT PPDU to the STA2 after the xIFS elapses. In addition, to reduce overheads of an acknowledgment frame, the STA1 replies with an acknowledgment frame only after receiving all short non-LLT PPDUs, which significantly increases a latency in replying with the acknowledgment frame. Moreover, after receiving an LLT PPDU, the STA2 also replies with an acknowledgment frame. The acknowledgment frame may be a block acknowledgment (block acknowledgment, BA) frame, or may be an ACK frame. In FIG. 2, SIFS indicates a short interframe space (short interframe space), RTS indicates request to send (request to send), and CTS indicates clear to send (clear to send).

In the foregoing LLT preemption transmission method, how to reduce power consumption of the STA needs to be resolved.

To resolve the foregoing problem, this application provides a low-latency preemption transmission solution, to resolve the foregoing problem.

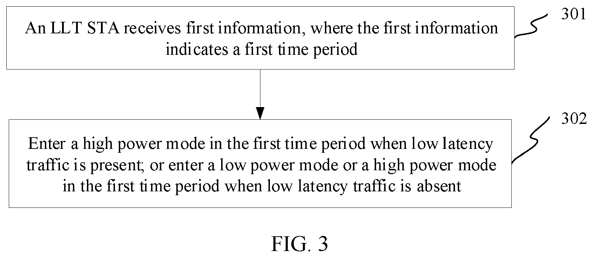

FIG. 3 is a diagram of a communication method according to an embodiment of this application. The method is performed by a terminal device (for example, an LLT STA) or a module (for example, a chip) used in the terminal device, and a network device (for example, an AP) or a module (for example, a chip) used in the network device. For ease of description, the following uses an example in which the AP and the LLT STA perform the method for description.

Step 301: The LLT STA receives first information, where the first information indicates a first time period, and the first time period is time available for high power (high power, HP) transmission.

The first information may be the first time period, or may be information used to determine the first time period.

Step 302: Enter a high power mode in the first time period when low latency traffic is present; or enter a low power (low power, LP) mode or a high power mode in the first time period when low latency traffic is absent.

The low power mode means a working mode in which power consumption is less than a power consumption threshold, for example, includes an energy saving (power saving, PS) mode or a doze state (doze state). Working parameters of different low power modes may be different. The high power mode means a working mode in which power consumption is greater than or equal to the power consumption threshold, for example, includes an active (active) mode or an awake state (awake state). Working parameters of different high power modes may be different.

In the foregoing solution, a working mode of the LLT STA may be switched between the high power mode and the low power mode, so that the LLT STA is not in the high power mode for long time, to help reduce power consumption of the device.

In this embodiment of this application, switching between the low power mode and the high power mode requires switching time. Therefore, when the low power mode is about to end, the LLT STA needs to start switching in advance based on switching time of the LLT STA, to ensure that the LLT STA is in the high power mode in a target time period. The switching time between the low power mode and the high power mode is not limited in this embodiment of this application. Specifically, a switching start moment may be autonomously determined by each vendor.

In this embodiment of this application, the switching time between the low power mode and the high power mode varies with different working parameters. For example, if the low power mode is defined as single-antenna reception and the high power mode is defined as multi-antenna reception, the switching time may be at a nanosecond (ns) level; if switching between the energy saving mode and the active mode is performed, the switching time may be 100 to 200 microseconds (µs); or if switching between the low power mode and the high power mode relates to bandwidth (bandwidth, BW) switching, the switching time may be at a millisecond (ms) level.

In a possible implementation method, when the low latency traffic is present, if a start moment of the first time period is unknown, the LLT STA enters the high power mode, detects a non-low latency traffic frame, determines the start moment of the first time period based on the non-low latency traffic frame, and enters the low power mode or maintains the high power mode; and enters the high power mode at the start moment of the first time period or before the start moment of the first time period.

In a possible implementation method, when the low latency traffic is present, if a start moment of the first time period is known, the LLT STA enters the low power mode, and enters the high power mode at the start moment of the first time period or before the start moment of the first time period.

In a possible implementation method, when the low latency traffic is present, the LLT STA enters the high power mode, and detects a non-low latency traffic frame; after transmission of the non-low latency traffic frame is completed, preempts a channel to transmit a low latency traffic frame; and after receiving an acknowledgment frame for the low latency traffic frame, enters the low power mode.

In a possible implementation method, the LLT STA enters the high power mode in a second time period after the first time period ends, to detect whether a non-low latency traffic frame, a downlink low latency traffic frame, or a trigger frame is present. The trigger frame indicates an uplink transmission resource. The LLT STA may send an uplink low latency traffic frame or a buffer status report (buffer status report, BSR) frame by using the uplink transmission resource. The uplink low latency traffic frame carries uplink low latency traffic and a data amount of the uplink low latency traffic is less than a data amount threshold. The BSR frame indicates to-be-transmitted uplink low latency traffic, and a data amount of the to-be-transmitted uplink low latency traffic is greater than or equal to the data amount threshold. Cases are described below.

Case 1: When detecting the non-low latency traffic frame in the second time period, the LLT STA enters the low power mode because the LLT STA does not need to receive the non-low latency traffic frame.

In a possible implementation method, after transmission of the non-low latency traffic frame is completed, the LLT STA enters the high power mode, to detect whether a downlink low latency traffic frame or a trigger frame is present. The trigger frame indicates an uplink transmission resource, and the LLT STA may send an uplink low latency traffic frame or a BSR frame by using the uplink transmission resource.

Case 2: When the LLT STA detects the trigger frame in the second time period, and has low latency traffic, the LLT STA maintains the high power mode, to send the uplink low latency traffic frame or the BSR frame on the uplink transmission resource indicated by the trigger frame.

Case 3: When the LLT STA detects the trigger frame in the second time period, and has low latency traffic (that is, buffers data of the uplink low latency traffic), but the uplink transmission resource indicated by the trigger frame does not include an uplink transmission resource of the LLT STA, and does not include an uplink transmission resource with AID=0, the LLT STA enters the low power mode for first duration.

The uplink transmission resource with AID=0 is an uplink transmission resource that may be used by a plurality of associated STAs through contention, and is referred to as an associated-user contention-based uplink transmission resource or a shared uplink transmission resource.

In Case 3, although the LLT STA needs to transmit the uplink low latency traffic to the AP, the AP does not allocate the uplink transmission resource to the LLT STA in the trigger frame and the uplink transmission resource with AID=0 is not included. Therefore, the LLT STA cannot transmit the uplink low latency traffic frame, and then the LLT STA may enter the low power mode to reduce power consumption. Duration for which the LLT STA maintains the low power mode is the first duration, and the first duration may be indicated by the trigger frame, or the LLT STA determines the first duration based on at least one of transmission duration of the uplink low latency traffic, an interframe space, and duration of an acknowledgment frame. The transmission duration of the uplink low latency traffic is transmission duration for receiving the uplink low latency traffic by the AP. The transmission duration of the uplink low latency traffic may be indicated by the AP to the LLT STA. The duration of the acknowledgment frame is transmission duration for receiving the acknowledgment frame by the AP. The duration of the acknowledgment frame may be indicated by the AP to the LLT STA.

In Case 3, after entering the low power mode for the first duration, the LLT STA may enter the high power mode and detect the downlink low latency traffic frame. The LLT STA maintains the high power mode when the downlink low latency traffic frame is detected and the downlink low latency traffic frame includes downlink low latency traffic of the LLT STA, to receive the downlink low latency traffic from the AP. Alternatively, the LLT STA enters the low power mode when the downlink low latency traffic frame is detected and the downlink low latency traffic frame does not include downlink low latency traffic of the LLT STA. Alternatively, the LLT STA enters the low power mode when no downlink low latency traffic frame is detected.

Case 4: When the trigger frame is detected in the second time period, but the low latency traffic is absent, enter the low power mode for first duration.

The trigger frame indicates the uplink transmission resource. For a meaning of the first duration, refer to the foregoing descriptions.

The LLT STA does not have the uplink low latency traffic. Even if the LLT STA detects that the uplink transmission resource is allocated to the LLT STA by using the trigger frame, the LLT STA does not need to send the uplink low latency traffic. Therefore, the LLT STA may enter the low power mode for the first duration.

Case 5: When the LLT STA detects the trigger frame in the second time period, and has low latency traffic (that is, buffers data of the uplink low latency traffic), but the uplink transmission resource indicated by the trigger frame does not include an uplink transmission resource of the LLT STA and includes an uplink transmission resource with AID=0, the LLT STA maintains the high power mode and contends for use of the associated-user contention-based uplink transmission resource to transmit the low latency traffic.

The uplink transmission resource with AID=0 is an uplink transmission resource that may be used by a plurality of associated STAs through contention, and is referred to as an associated-user contention-based uplink transmission resource or a shared uplink transmission resource.

If the LLT STA obtains the associated-user contention-based uplink transmission resource through contention, the LLT STA sends the uplink low latency traffic frame. If the LLT STA does not obtain the associated-user contention-based uplink transmission resource through contention, the LLT STA does not send the uplink low latency traffic frame.

Case 6: The LLT STA maintains the high power mode when the downlink low latency traffic frame is detected in the second time period and the downlink low latency traffic frame includes downlink low latency traffic of the LLT STA, to receive the downlink low latency traffic frame.

Case 7: The LLT STA enters the low power mode for second duration when downlink low latency traffic frame is detected in the second time period and the downlink low latency traffic frame does not include downlink low latency traffic of the LLT STA.

The LLT STA may determine the second duration based on remaining transmission duration of the downlink low latency traffic frame and an interframe space.

In a possible implementation method, the LLT STA enters the high power mode before the non-low latency traffic frame arrives. The LLT STA may maintain the high power mode if the non-low latency traffic frame is detected and transmission duration of the non-low latency traffic frame is less than a first threshold.

In a possible implementation method, different downlink non-low latency traffic frames (for example, non-LLT PPDUs) have equal duration.

In a possible implementation method, each downlink non-low latency traffic frame (for example, a non-LLT PPDU) carries a count indication, and the count indication is used to determine the start moment of the first time period. For example, a first time period is present after each fixed quantity of non-LLT PPDUs, when detecting the non-LLT PPDU, the LLT STA may determine a start moment of a next first time period based on a count indication in the non-LLT PPDU.

In this embodiment of this application, preemption transmission may be supported or may not be supported in the TXOP, and whether preemption transmission is supported in the TXOP needs to be determined based on a dynamic indication. The following describes four different implementations in which the AP notifies whether preemption transmission is supported in the TXOP.

Implementation 1: The AP sends a beacon (Beacon) frame. A preemption transmission enabling/support indication, for example, a 1-bit Preemption Support subfield, is added to the beacon frame, to indicate whether preemption transmission of the low latency traffic is enabled/supported in the TXOP. For example, if Preemption Support is set to 1, it indicates that preemption transmission is supported in all TXOPs or a TXOP initiated by the AP in a current basic service set (basic service set, BSS). Alternatively, if Preemption Support is set to 1, it indicates that the current AP supports preemption transmission of the low latency traffic. If a preemption transmission function needs to be enabled, additional signaling is needed for indication.

Implementation 2: In the TXOP, an initiator and a receiver of the TXOP exchange management frames, and negotiate to support/reject preemption transmission of the low latency traffic in the current TXOP.

Implementation 3: In the TXOP, an initiator of the TXOP sends a control frame or a management frame, such as an RTS frame, carrying a preemption transmission indication, to notify that preemption transmission of the low latency traffic is supported/rejected in the current TXOP, and may also be used to notify a transmission preemption parameter.

Implementation 4: Outside the TXOP, the AP sends a management frame to indicate to enable/disable preemption transmission; or in the TXOP, an initiator of the TXOP sends a management frame to notify that preemption transmission is supported/rejected in the current TXOP. If preemption transmission is enabled, before the AP notifies that the function is disabled, preemption transmission is supported all TXOPs or a TXOP initiated by the AP in a current BSS. The management frame may be further used to notify a preemption transmission parameter, for example, a PSP parameter. If the management frame is an independent addressing frame or a group addressing frame, the receiver needs to reply with a response frame. If the management frame is a broadcast frame, the receiver may not need to reply with a response frame.

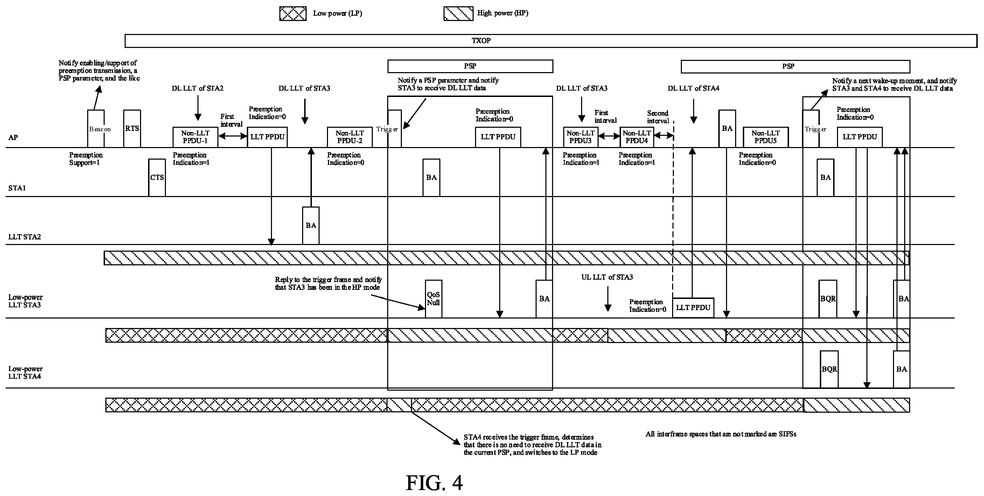

The following describes the embodiment in FIG. 3 with reference to specific examples. In the following examples in FIG. 4 to FIG. 10, T1 and T2 are specific examples of the first duration and the second duration respectively in the embodiment in FIG. 3, an LLT PPDU sent by an AP is a specific example of a downlink low latency traffic frame in the embodiment in FIG. 3, an LLT PPDU sent by an LLT STA is a specific example of an uplink low latency traffic frame in the embodiment in FIG. 3, a non-LLT PPDU sent by the AP is a specific example of a non-low latency traffic frame in the embodiment in FIG. 3, and a short preemption window (short preemption window, SPW), a long preemption window (long preemption window, LPW), or a preemption service period (preemption service period, PSP) is a specific example of the first time period and the second time period in the embodiment in FIG. 3. In the following examples in FIG. 4 to FIG. 10, a STA1 is a non-LLT STA, and a STA2 to a STA4 are all LLT STAs. Working modes of the STA2 to the STA4 may be switched between a high power mode and a low power mode. In a TXOP, a long non-LLT PPDU sent by the AP to the STA1 is divided into a plurality of short non-LLT PPDUs for transmission, and an interframe space may be an SIFS or another newly defined interframe space (for example, a modified interframe space (modified interframe space, MIFS) or a slot1).

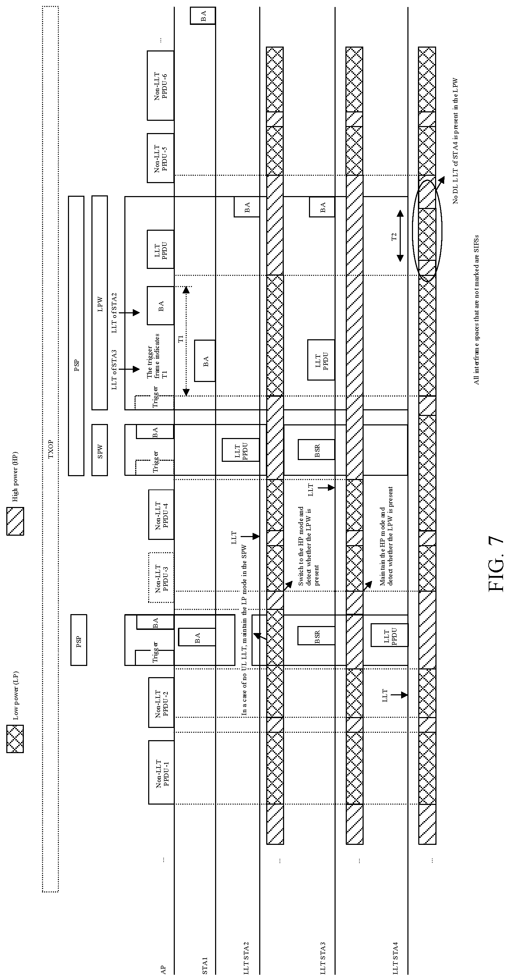

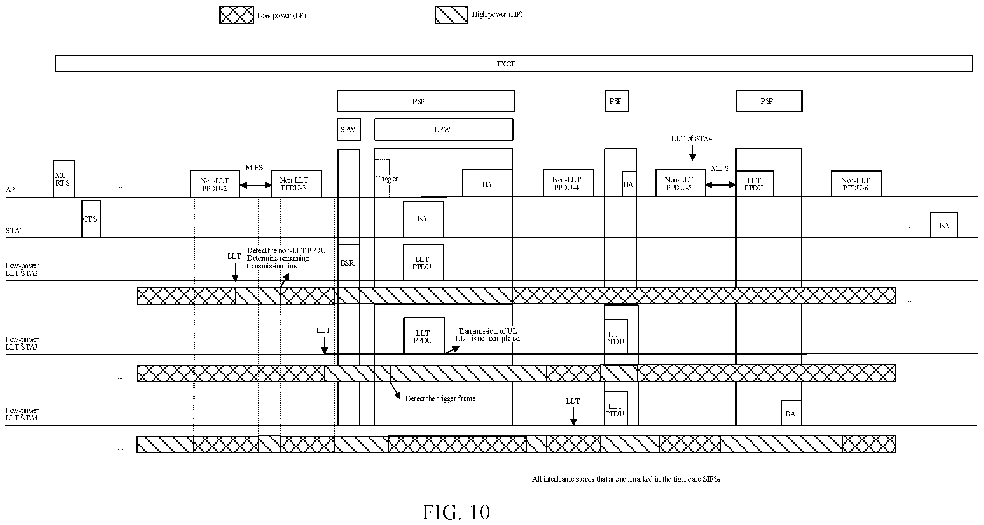

The following describes three parts. A first part includes a low-power restricted preemption delivery (restricted preemption delivery, RPD) solution, and relates to FIG. 4 to FIG. 6. A second part includes a low-power equal-interval preemption transmission solution, and relates to FIG. 7 to FIG. 9. A third part includes an unequal-interval preemption transmission solution, and relates to FIG. 10. It should be noted that the following three parts may be separately implemented, or may be implemented in combination with each other.

### First part: Low-power RPD transmission solution

In the RPD solution, preemption transmission may be supported or may not be supported in the TXOP, and whether preemption transmission is supported in the TXOP needs to be determined based on a dynamic indication. The following describes four different implementations in which the AP notifies whether preemption transmission is supported in the TXOP.

In an implementation method, an LLT STA with an LP mode receives DL LLT only in a PSP, and may perform preemption transmission of UL LLT in a time interval, allowing preemption transmission, after transmission of any PPDU ends.

In an implementation method, in the PSP, the AP sends a trigger frame to determine whether a target device (that is, an LLT STA with an LP mode) has been woken up; and if the target device has been woken up, after receiving the trigger frame, the target device replies with a control frame (for example, a PS-Poll frame), a management frame (for example, a bandwidth query report (bandwidth query report, BQR) frame, a buffer status report (buffer status report, BSR) frame, or an action frame), or a data frame (for example, a QS-Null frame) after an interval of an SIFS. The AP confirms, based on the received reply frame, that the target device has been woken up, and sends a DL LLT PPDU, where the DL LLT PPDU carries DL LLT data of the target device.

In an implementation method, outside the PSP, if the LLT STA with the LP mode has no UL LLT data, the LLT STA with the LP mode is in the LP mode.

In an implementation method, outside the TXOP, the AP sends a beacon (Beacon) frame or a management frame to the LLT STA with the LP mode, to notify a next wake-up moment.

In an implementation method, in the TXOP, an initiator of the TXOP uses a control frame (such as an RTS frame or a trigger frame), a management frame, or the like to carry indication information, to notify a start moment of a next PSP.

In an implementation method, the AP may notify the LLT STA of one or more PSP parameter sets by using a beacon frame, a management frame, or the like, and each PSP parameter set may indicate a parameter of a periodic PSP. When the PSP parameter set indicates the periodic PSP, one piece of indication information may be included, to indicate duration of the periodic PSP, for example, a quantity of PSPs that use the current PSP parameter set.

The following describes the RPD solution with reference to FIG. 4 to FIG. 6, and these solutions are all applicable to the periodic PSP and an aperiodic PSP. The LLT STA2 is an LLT STA without an LP mode, that is, the LLT STA2 may transmit low latency traffic, but is always in an HP mode. The LLT STA3 and the LLT STA4 are LLT STAs with an LP mode, that is, the LLT STA3 and the LLT STA4 may transmit low latency traffic, and may switch between the LP mode and the HP mode.

FIG. 4 is a diagram of an RPD solution. The LLT STA with the LP mode receives DL LLT only in the PSP, and the LLT STA without the LP mode may perform preemption receiving of DL LLT in a first interval, allowing preemption, after transmission of PPDUs ends. Preemption transmission of UL LLT of all LLT STAs may be performed in a second interval, allowing preemption, after transmission of PPDUs ends. For example, the second interval is a slot1. For example, the slot1 is an SIFS, the first interval is an MIFS, and the second interval is less than the first interval.

When the LLT STA with the LP mode does not buffer UL LLT data, the LLT STA with the LP mode maintains the LP mode outside the PSP, as shown by the LLT STA4 in FIG. 4. If the LLT STA with the LP mode buffers UL LLT, the LLT STA with the LP mode may switch from the LP mode to the HP mode outside the PSP, and perform preemption transmission of the UL LLT data, as shown by the LLT STA3 in FIG. 4.

If the LLT STA with the LP mode needs to receive DL LLT data in the PSP, the LLT STA with the LP mode maintains the HP mode until a DL LLT PPDU is received and a BA is returned. If the LLT STA with the LP mode does not need to receive DL LLT data in the PSP, after receiving the trigger frame, the LLT STA with the LP mode may switch to the LP mode and maintain the LP mode before a start moment of a next PSP.

In an implementation method, the AP uses a beacon frame, a control frame (such as an RTS frame or a trigger frame), a management frame, or the like to carry indication information, to notify a next wake-up moment, for example, a start moment of a PSP or a start moment of a beacon frame. In the periodic PSP, the next wake-up moment is determined and therefore does not need to be separately notified. In the aperiodic PSP, in the PSP, the AP notifies the next wake-up moment by using the trigger frame, or the AP notifies the next wake-up moment by using the management frame at the end of the TXOP.

At the start moment of the PSP, the AP delivers the trigger frame to notify a PSP parameter (for example, a start moment of a next PSP), request to receive DL LLT data (for example, a new 1-bit indication), and the like. The LLT STA with the LP mode receives the trigger frame, and determines whether DL LLT data needs to be received in the current PSP. If the DL LLT data needs to be received in the current PSP, the LLT STA with the LP mode maintains the HP mode, as shown by the LLT STA3 in FIG. 4. If the DL LLT data does not need to be received in the current PSP, the LLT STA with the LP mode switches to the LP mode and maintains the LP mode, as shown by the LLT STA4 in FIG. 4.

In addition, the PPDU may include indication information, for example, a 1-bit Preemption Indication subfield, which is set to 1, to indicate that uplink or downlink preemption transmission is allowed in a specified interval after the current PPDU is transmitted.

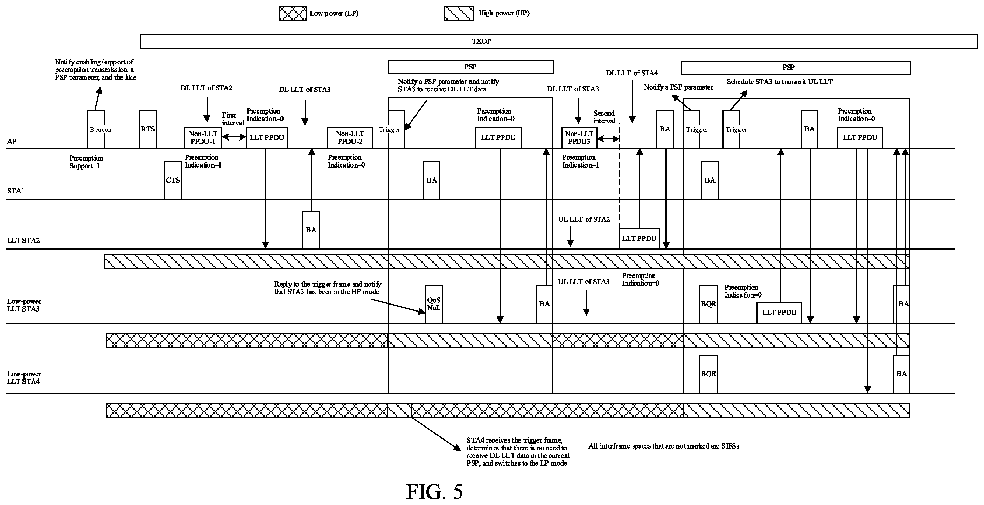

FIG. 5 is a diagram of an RPD solution. UL/DL LLT of the LLT STA with the LP mode is transmitted only in the PSP. In this case, the LLT STA with the LP mode is in the LP mode outside the PSP. UL/DL LLT of the LLT STA without the LP mode is allowed to preempt a channel for transmission outside the PSP. For example, after transmission of a PPDU with Preemption Indication=0 ends, the LLT STA without the LP mode is allowed to perform UL/DL preemption transmission in a specified interval. Compared with the example in FIG. 4, in the example in FIG. 5, only the UL LLT of the LLT STA with the LP mode is allowed to be transmitted in the PSP. To be specific, the LLT STA receives the trigger frame sent by the AP, and reports a low latency traffic report frame or transmits UL LLT data based on a transmission resource allocated by the AP.

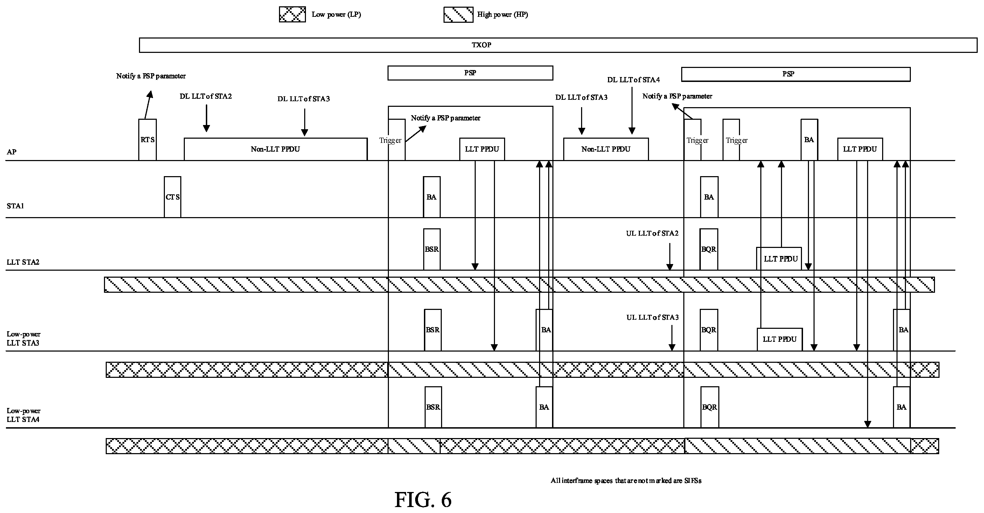

FIG. 6 is a diagram of an RPD solution. UL/DL LLT of all LLT STAs are transmitted only in the PSP, and only one non-LLT PPDU needs to be transmitted between PSPs, to reduce preamble symbol overheads. As shown in FIG. 6, in a 1^{st} PSP, the AP sends a trigger frame to request the LLT STA to report a low latency traffic report frame, and notifies the LLT STA2 and the LLT STA3 to prepare to receive a downlink LLT PPDU. An indication bit is added to the trigger frame, and is used to notify the LLT STA whether DL LLT data that needs to be received is present in the current PSP. If the DL LLT data that needs to be received is present in the current PSP, the LLT STA with the LP mode needs to maintain the HP mode. If the DL LLT data that needs to be received is not present in the current PSP, the LLT STA with the LP mode may switch to the LP mode. In addition, the LLT STA with the LP mode that does not need to send/receive an LLT PPDU in the PSP may switch to the LP mode after replying with the low latency traffic report frame.

### Second part: Low-power equal-interval transmission solution

The following describes the low-power equal-interval transmission solution with reference to FIG. 7 to FIG. 9. The LLT STA2 to the LLT STA4 are all LLT STAs with an LP mode, that is, the LLT STA2 to the LLT STA4 may transmit low latency traffic, and may switch between the LP mode and the HP mode.

FIG. 7 is a diagram of a low-power equal-interval preemption transmission solution. One PSP is inserted at an interval of a specified quantity of non-LLT PPDUs. A specified quantity of non-LLT PPDUs are present between two adjacent PSPs. A user is allowed to flexibly configure an interval between two adjacent PSPs (for example, a quantity of non-LLT PPDUs used as an interval may be flexibly configured) and duration of each PSP, or the interval and the duration of each PSP are specified in a protocol (that is, statically configured).

Optionally, each PSP includes two time periods, which are respectively referred to as an SPW and an LPW.

The SPW is used to transmit an uplink low latency traffic frame and a data amount of the uplink low latency traffic frame is small (for example, less than a data amount threshold), or is used to transmit a low latency traffic report frame, where the low latency traffic report frame indicates a data amount of to-be-transmitted low latency traffic, and the data amount of the to-be-transmitted low latency traffic is greater than or equal to the data amount threshold. For example, the low latency traffic report frame may be a BSR frame.

A length of the LPW is not fixed, and the LPW is inserted by the AP based on a requirement. For example, when the AP needs to send a downlink low latency traffic frame to the LLT STA, the AP may insert the LPW; or when the LLT STA needs to send an uplink low latency traffic frame and a data amount of the uplink low latency traffic frame is large (for example, greater than or equal to the data amount threshold), the AP may also insert the LPW. The LPW is greater than the SPW.

A trigger frame (trigger frame) may be sent at a start moment of each PSP, SPW, or LPW, and the trigger frame is used to allocate an uplink transmission resource.

The following uses an example in which the PSP includes the SPW and the LPW for description.

When the LLT STA does not buffer uplink low latency traffic (UL LLT), the LLT STA autonomously determines whether to switch to the HP mode before the start moment of the SPW. The following two different manners are specifically included.

Manner 1: The LLT STA maintains the LP mode in the SPW, and the LLT STA switches to the HP mode in a specified interval after the SPW ends, and detects a signal to determine whether the LPW is present, where the specified interval is usually an SIFS.

Manner 2: The LLT STA switches to the HP mode before the start moment of the SPW, and the LLT STA may report a BSR frame in the SPW, maintain the HP mode after the SPW ends, and detect a signal to determine whether the LPW is present.

When the LLT STA has buffered uplink low latency traffic (UL LLT), the LLT STA switches to the HP mode before the start moment of the SPW, and reports a low latency traffic report frame (such as a BSR frame or a BQR frame), transmits a UL LLT frame, or the like in the SPW. Details are as follows.
(1) If the data amount of the UL LLT is small, for example, the data amount of the UL LLT is less than the data amount threshold, the LLT STA sends an LLT PPDU in the SPW by using the transmission resource specified by the trigger frame, maintains the HP mode after the SPW ends, and detects a signal to determine whether the LPW is present.
   The LLT STA2 in FIG. 7 is used as an example. The LLT STA2 buffers uplink low latency traffic before an SPW in a 2^{nd} PSP, and a data amount of the uplink low latency traffic is small. Therefore, the LLT STA2 switches to the HP mode before the SPW, and maintains the HP mode and sends an LLT PPDU in the SPW.
(2) If the data amount of the UL LLT is large, for example, the data amount of the UL LLT is greater than or equal to the data amount threshold, the LLT STA reports a BSR frame in the SPW, where the BSR frame indicates a data amount of to-be-uploaded UL LLT, maintains the HP mode after the SPW ends, and sends an LLT PPDU in the LPW after the SPW based on the transmission resource specified by the trigger frame.

The LLT STA3 in FIG. 7 is used as an example. The LLT STA3 buffers uplink low latency traffic before an SPW in a 2^{nd} PSP, and a data amount of the uplink low latency traffic is large. Therefore, the LLT STA3 switches to the HP mode before the SPW, maintains the HP mode and sends a BSR frame in the SPW, receives the trigger frame in an LPW after the SPW, and sends an LLT PPDU on the transmission resource specified by the trigger frame.

The following describes an implementation method in which the LLT STA determines whether the LPW is present after the SPW.

Case 1: After the SPW ends, the LLT STA detects the non-LLT PPDU after a specified interval (for example, an SIFS), and determines that the LPW is absent after the SPW.

If determining that the LPW is absent, the LLT STA switches to the LP mode, maintains the LP mode in remaining transmission time of the non-LLT PPDU, and switches to the HP mode before a start moment of a next non-LLT PPDU.

In a possible implementation, a 1-bit indication bit may be added to a SIG field in a PPDU, to distinguish a non-LLT PPDU from an LLT PPDU.

Case 2: After the SPW ends, after a specified interval (for example, an SIFS), if detecting a trigger frame or a DL LLT PPDU, the LLT STA determines that the LPW is present after the SPW.

In an implementation method, an LPW Duration field may be added to the trigger frame to indicate duration of the LPW, or a UL Preemption Duration subfield may be added to the trigger frame to indicate uplink preemption transmission duration. The uplink preemption transmission duration may include duration of a BA frame.

The following separately describes detection of the trigger frame and detection of the DL LLT PPDU.

Scenario 1: In the LPW, the LLT STA detects the trigger frame.

If the transmission resource is not allocated to the LLT STA by using the trigger frame, the LLT STA switches to the LP mode after detecting the trigger frame. After T1 duration, the LLT STA switches to the HP mode in a specified interval, and detects whether the DL LLT PPDU is present. After T1, if the LLT STA detects the non-LLT PPDU, the LLT STA determines that the LPW ends, switches to the LP mode and maintains the LP mode, and switches to the HP mode before a start moment of a next non-LLT PPDU. For example, refer to the LLT STA2 in FIG. 7. The LLT STA2 maintains the LP mode in the T1 duration after the trigger frame in the LPW, and switches to the HP mode in the specified interval after T1, to detect whether the DL LLT PPDU is present.

In an implementation method, if the trigger frame indicates the uplink preemption transmission duration, T1 is equal to the uplink preemption transmission duration.

In another implementation method, if the trigger frame does not indicate the uplink preemption transmission duration, the LLT STA determines T1 based on duration of a UL LLT PPDU, an interframe space, and the duration of the BA frame. Both the duration of the UL LLT PPDU and the duration of the BA frame may be indicated by the trigger frame.

Scenario 2: In the LPW, the LLT STA detects the DL LLT PPDU.

If the DL LLT PPDU does not include downlink low latency traffic data sent to the LLT STA, for example, the DL LLT PPDU does not include user fields matching a STA-ID of the LLT STA, the LLT STA switches to the LP mode, and after T2, switches to the HP mode in a specified interval, and detects the non-LLT PPDU. If the duration of the BA frame is unknown, T2 may be determined based on remaining time of the DL LLT PPDU, an interframe space, and shortest duration of the BA frame. If the duration of the BA frame is known, the LPW ends after T2. T2=remaining time of the DL LLT PPDU+interframe space+duration of the BA frame. Refer to the LLT STA4 in FIG. 7. An example of T2 is provided.

If the DL LLT PPDU includes downlink low latency traffic data sent to the LLT STA, for example, the DL LLT PPDU includes user fields matching a STA-ID of the LLT STA, the LLT STA maintains the HP mode, receives the DL LLT PPDU, replies with the BA frame, where an end moment of the BA frame is aligned with an end moment of the LPW, and switches to the LP mode after the LPW ends. Refer to the LLT STA2 and the LLT STA3 in FIG. 7. The LLT STA2 and the LLT STA3 receive DL LLT PPDUs respectively sent to the LLT STA2 and the LLT STA3.

In an implementation method, if the LLT STA knows an end moment of the LPW, after the LPW ends, the LLT STA does not need to detect the non-LLT PPDU again, and may maintain the LP mode until UL LLT data is buffered, and switch to the HP mode before a start moment of a next SPW.

In the foregoing detection process, the LLT STA ignores a PPDU of a non-associated AP or a non-coordinated AP (for example, not belonging to a coordinated AP set), and the LLT STA may determine an associated/coordinated AP by using the following method:
Manner 1: A BSS Color subfield in a SIG field in a PPDU is detected to determine whether the PPDU is transmitted by the associated AP or the coordinated AP.
   Optionally, the BSS Color may be configured as the last six bits of a medium access control (medium access control, MAC) address of the AP, to reduce a probability of a conflict between adjacent basic service sets (basic service set, BSS).
Manner 2: It is detected that a transmission address (transmission address, TA)/receiving address (receiving address, RA) of a PPDU is a MAC address of an associated AP or an AP in a coordinated AP set.

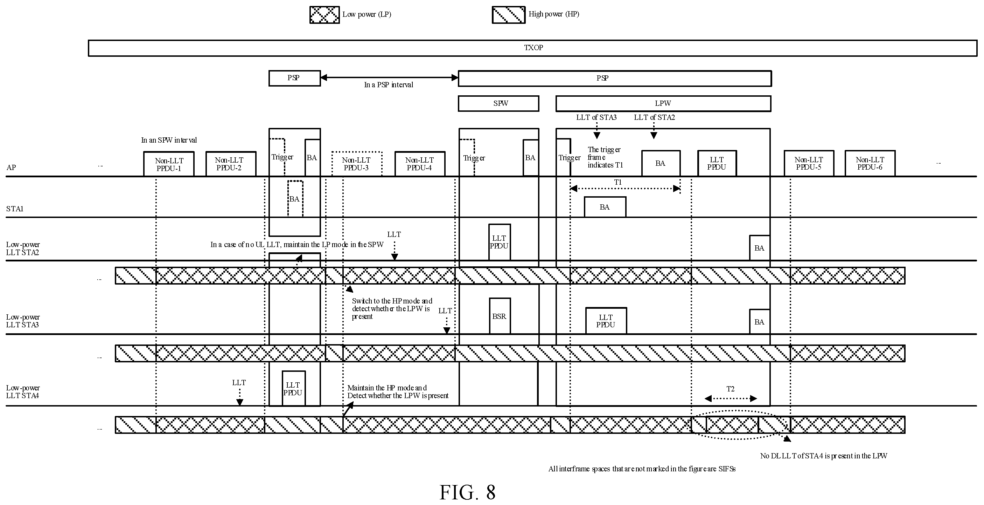

In an implementation method, duration of non-LLT PPDUs in the TXOP may be configured to be the same and equal, and a quantity of non-LLT PPDUs between two adjacent SPWs is fixed. FIG. 8 is another diagram of a low-power equal-interval preemption transmission solution. In this example, different non-LLT PPDUs have a same length, and a quantity of non-LLT PPDUs between two adjacent PSPs is 2. The LLT STA may switch to the LP mode when detecting a 1^{st} non-LLT PPDU in an interval between any two PSPs, and maintain the LP mode until a start moment of a next PSP. Before the start moment of the next PSP, if the LLT STA does not buffer UL LLT, the LLT STA maintains the LP mode until the next PSP ends. As shown in FIG. 8, if the LLT STA2 does not need to send the UL LLT in a 1^{st} PSP, the LLT STA maintains the LP mode. Before the start moment of the next PSP, if the LLT STA has buffered UL LLT, the LLT STA switches to the HP mode before the start moment of the next PSP, reports a BSR frame or transmits a UL LLT frame in the PSP, and maintains the HP mode after the PSP ends. As shown in FIG. 8, if the LLT STA4 needs to send the UL LLT in a 1^{st} PSP, the LLT STA4 switches to the HP mode before the PSP. This manner may increase duration for which the LLT STA enters the LP mode, to further reduce power consumption.

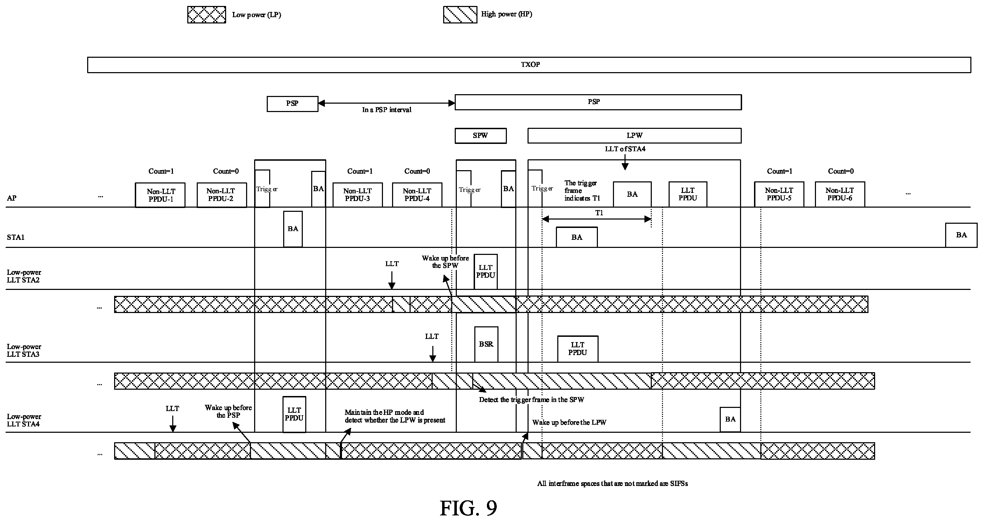

In an implementation method, a count indication may be added to the non-LLT PPDU. FIG. 9 is another diagram of a low-power equal-interval preemption transmission solution. In this example, a count indication is added to each non-LLT PPDU.

An incremental/decremental count indication is added to non-LLT PPDUs (for example, in a SIG field). In this case, the LLT STA may determine a start moment of a next PSP by detecting any non-LLT PPDU in a PSP interval. Specifically, it is required that duration of the non-LLT PPDU is fixed, and a quantity of non-LLT PPDUs between two adjacent PSPs is fixed. When the LLT STA detects that an incremental/decremental count indication of any non-LLT PPDU reaches a specified threshold, start moment of the next PSP=transmission end moment of the non-LLT PPDU+interframe space.

A decremental count is used as an example. An initial value of a counter is set to N-1, and a specified threshold is 0, where N is a quantity of non-LLT PPDUs between two adjacent PSPs. Refer to FIG. 9. N=2. When the LLT STA detects that a count (count) indication=0 in a non-LLT PPDU, it indicates that the non-LLT PPDU is a last non-LLT PPDU between two adjacent PSPs. Therefore, it may be determined that a start moment of a next PSP is equal to a sum of a transmission end moment of the non-LLT PPDU and an interframe space.

In an implementation method, in the TXOP, an LLT STA that performs only preemption transmission of uplink low latency traffic and does not perform receiving of downlink low latency traffic is woken up only after the UL LLT is buffered. After the LLT STA is woken up and detects any non-LLT PPDU, the LLT STA autonomously chooses whether to switch to the LP mode and maintains the LP mode until the start moment of the next PSP. For example, when duration of the non-LLT PPDU is short, the LLT STA may maintain the HP mode until the start moment of the next PSP. After the LLT STA sends the UL LLT data by using the specified transmission resources in the PSP, the LLT STA switches to the LP mode and maintains the LP mode until next UL LLT data arrives. For example, the LLT STA2 in FIG. 9 is woken up to enter the HP mode after the LLT arrives, and detects the non-LLT PPDU. After detecting any non-LLT PPDU, the LLT STA2 may determine a start moment of a next PSP based on a count indication in the non-LLT PPDU, and then maintain the LP mode until the start moment of the next PSP. If the LLT STA is woken up after buffering the UL LLT and detects no non-LLT PPDU after the LLT STA is woken up, the LLT STA may detect the trigger frame in the SPW, and report a BSR frame, a UL LLT PPDU, or the like based on the transmission resource indicated by the trigger frame. If the LLT STA reports the BSR frame in the SPW in the PSP, the LLT STA needs to detect the trigger frame delivered in the LPW, and sends the LLT PPDU based on an uplink low latency traffic transmission resource indicated by the trigger frame. In addition, after receiving the BA frame for the LLT PPDU, the LLT STA enters the LP mode, and maintains the LP mode until next UL LLT arrives. For example, the LLT STA3 in FIG. 9 is woken up to enter the HP mode after the LLT arrives, and detects no non-LLT PPDU but detects the trigger frame in the SPW. In this case, the LLT STA3 may send a BSR frame in the SPW, and send the LLT PPDU in the LPW after sending the BSR frame.

Third part: Low-power unequal-interval preemption transmission solution

In an implementation method, to reduce air interface overheads of the PSP, the low-power unequal-interval preemption transmission solution may be designed. To be specific, the AP is not required to insert a PSP after sending a specified quantity of non-LLT PPDUs, but the LLT STA inserts a PSP when an LLT PPDU or a BSR frame needs to be sent. Therefore, a quantity of non-LLT PPDUs between two adjacent PSPs may not be fixed. In this solution, because a quantity of PSPs is reduced, signaling overheads of preemption transmission can be further reduced. FIG. 10 is a diagram of a low-power unequal-interval preemption transmission solution. The LLT STA2 to the LLT STA4 are all LLT STAs with an LP mode, that is, the LLT STA2 to the LLT STA4 may transmit low latency traffic, and may switch between the LP mode and the HP mode.

In this example, the AP sends a management frame (for example, a trigger frame) outside the TXOP or at a start moment of the TXOP to notify the STA of an uplink transmission resource that may be used in the PSP, and no longer sends the trigger frame in the PSP. A PSP may be inserted after any non-LLT PPDU or PSP. Each of an interframe space between the non-LLT PPDU and the PSP and an interframe space in the PSP is a slot1. The slot1 is usually set to an SIFS. In the figure, slot1=SIFS is used as an example for illustration. An interframe space between two consecutive non-LLT PPDUs is MIFS=slot1+slot 2, where values of the slot1 and the slot 2 may be flexibly configured. The MIFS is not less than time for two times of AP transmitting/receiving switching. The AP switching to a receiving state may be configured to monitor whether the PSP is present.

In the TXOP, only the UL LLT is present, and the LLT STA that does not need to receive the LLT PPDU does not need to detect the PSP, and is woken up to enter the HP mode only after buffering the UL LLT. The following separately uses the LLT STA2 and the LLT STA3 in FIG. 10 as examples for description.

After the LLT STA2 buffers the UL LLT, the LLT STA2 is woken up (that is, switches from the LP mode to the HP mode) and detects the non-LLT PPDU. After detecting the non-LLT PPDU, the LLT STA2 autonomously chooses whether to switch to the LP mode and maintains the LP mode until the start moment of the next PSP. For example, when duration of the non-LLT PPDU is short, the LLT STA may maintain the HP mode until the start moment of the next PSP. Alternatively, the LLT STA enters the LP mode before the start moment of the next PSP. In the PSP, if a data amount of the UL LLT is large, the LLT STA2 reports a BSR frame and reports an LLT PPDU in an LPW of the PSP, as shown in FIG. 10. In a possible implementation, if a data amount of the UL LLT is small, the LLT STA2 transmits the UL LLT in the SPW of the PSP by using an allocated uplink transmission resource, and does not need to request the AP to allocate an LPW to perform preemption transmission of the UL LLT. After completing transmission of the UL LLT in the SPW, the LLT STA2 may sleep, that is, switch from the HP mode to the LP mode.

After the LLT STA3 buffers the UL LLT data, the LLT STA3 is woken up and detects the non-LLT PPDU, but may detect no non-LLT PPDU. If the LLT STA3 detects a trigger frame, the LLT STA3 may transmit the UL LLT by using an uplink transmission resource allocated by using the trigger frame to the LLT STA3, or contending for an uplink transmission resource for random access of an associated user (that is, an uplink transmission resource corresponding to AID=0, which needs to be obtained by the LLT STA3 through contention). To ensure timely transmission of the UL LLT, for an LLT STA that does not report a BSR frame in a previous PSP, for example, the LLT STA3, the AP may allocate a small quantity of uplink transmission resources in the trigger frame of the PSP, to ensure that the LLT STA that misses the previous PSP transmits the UL LLT in time. In the PSP, if the LLT STA3 does not complete transmission of the buffered UL LLT, the LLT STA3 maintains the HP mode, continues to detect the non-LLT PPDU to determine the start moment of the next PSP, and performs preemption transmission of the UL LLT or reports a BSR frame in the next PSP. After the LLT STA3 transmits the buffered UL LLT data, the LLT STA3 switches to the LP mode.

In the TXOP, an LLT STA (for example, the LLT STA4 in FIG. 10) that performs preemption transmission of uplink low latency traffic and also performs receiving of downlink low latency traffic needs to enter the HP mode after buffering the UL LLT, detect the non-LLT PPDU to determine the start moment of the PSP, and also needs to detect the trigger frame or the DL LLT PPDU to determine whether the LPW is present. During transmission of the non-LLT PPDU, the LLT STA is allowed to switch to the LP mode, but needs to be woken up before a moment after the slot1 after transmission of the non-LLT PPDU ends, and detects the trigger frame or the DL LLT PPDU to determine whether the LPW is present.

In an implementation method, in this embodiment of this application, to distinguish the non-LLT PPDU from the LLT PPDU, a 1-bit indication bit may be added to a SIG field in a PPDU frame format, to indicate a type of a PPDU, that is, the non-LLT PPDU or the LLT PPDU.

It may be understood that, to implement the functions in the foregoing embodiments, the terminal device or the network device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

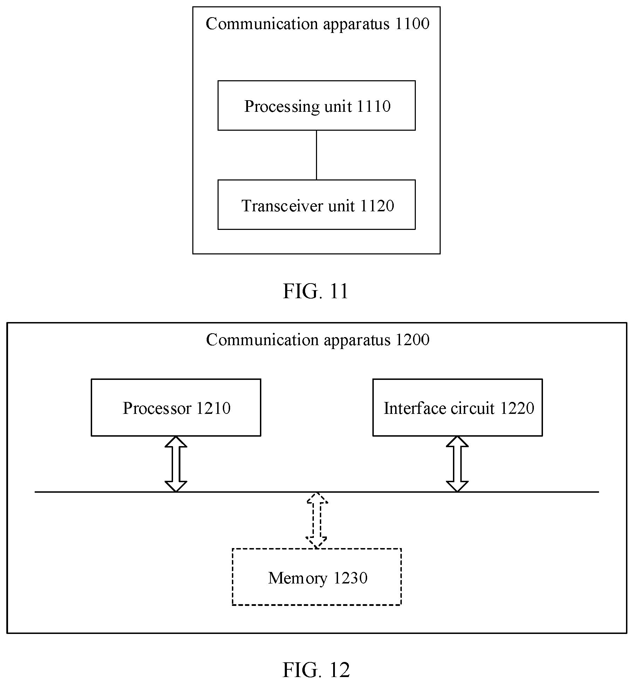

FIG. 11 and FIG. 12 are diagrams of possible structures of communication apparatuses according to embodiments of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be a terminal device, or may be a network device, or may be a module (for example, a chip) used in the terminal device or the network device.

A communication apparatus 1100 shown in FIG. 11 includes a processing unit 1110 and a transceiver unit 1120. The communication apparatus 1100 is configured to implement a function of the terminal device or the network device in the foregoing method embodiments.

When the communication apparatus 1100 is configured to implement a function of the terminal device in the foregoing method embodiments, the transceiver unit 1120 is configured to receive first information, where the first information indicates a first time period, and the first time period is time available for high power transmission; and the processing unit 1110 is configured to enter a high power mode in the first time period when low latency traffic is present; or enter a low power mode or a high power mode in the first time period when low latency traffic is absent.

In a possible implementation method, the processing unit 1110 is further configured to enter the high power mode in a second time period after the first time period ends.

In a possible implementation method, the processing unit 1110 is further configured to enter the low power mode when a non-low latency traffic frame is detected in the second time period.

In a possible implementation method, the processing unit 1110 is further configured to enter the high power mode after transmission of the non-low latency traffic frame is completed.

In a possible implementation method, the processing unit 1110 is further configured to maintain the high power mode when a trigger frame is detected in the second time period and the low latency traffic is present, where the trigger frame indicates an uplink transmission resource.

In a possible implementation method, the processing unit 1110 is further configured to detect a trigger frame in the second time period, where the trigger frame indicates an uplink transmission resource; and entering the low power mode for first duration when the low latency traffic is present, but the uplink transmission resource indicated by the trigger frame does not include an uplink transmission resource of the terminal device and does not include an associated-user contention-based uplink transmission resource; or entering the low power mode for first duration when the low latency traffic is absent.

In a possible implementation method, the first duration is indicated by the trigger frame.

In a possible implementation method, the processing unit 1110 is further configured to determine the first duration based on at least one of transmission duration of uplink low latency traffic, an interframe space, and duration of an acknowledgment frame.

In a possible implementation method, the processing unit 1110 is further configured to: after entering the low power mode for the first duration, enter the high power mode and detect a downlink low latency traffic frame.

In a possible implementation method, the processing unit 1110 is further configured to: after entering the high power mode and detecting the downlink low latency traffic frame, maintain the high power mode when the downlink low latency traffic frame is detected and the downlink low latency traffic frame includes downlink low latency traffic of the terminal device; enter the low power mode when the downlink low latency traffic frame is detected and the downlink low latency traffic frame does not include downlink low latency traffic of the terminal device; or enter the low power mode when no downlink low latency traffic frame is detected.

In a possible implementation method, the processing unit 1110 is further configured to detect a trigger frame in the second time period, where the trigger frame indicates an uplink transmission resource; and when the low latency traffic is present, but the uplink transmission resource indicated by the trigger frame does not include an uplink transmission resource of the terminal device and includes an associated-user contention-based uplink transmission resource, maintain the high power mode and contend for use of the associated-user contention-based uplink transmission resource to transmit the low latency traffic.

In a possible implementation method, the processing unit 1110 is further configured to maintain the high power mode when a downlink low latency traffic frame is detected in the second time period and the downlink low latency traffic frame includes downlink low latency traffic of the terminal device.

In a possible implementation method, the processing unit 1110 is further configured to enter the low power mode for second duration when a downlink low latency traffic frame is detected in the second time period and the downlink low latency traffic frame does not include downlink low latency traffic of the terminal device.

In a possible implementation method, the second duration is determined based on remaining transmission duration of the downlink low latency traffic frame and an interframe space.

In a possible implementation method, the processing unit 1110 is further configured to enter the high power mode before a non-low latency traffic frame arrives.

In a possible implementation method, the processing unit 1110 is further configured to maintain the high power mode if the non-low latency traffic frame is detected and transmission duration of the non-low latency traffic frame is less than a first threshold.

In a possible implementation method, different downlink non-low latency traffic frames have equal duration.

In a possible implementation method, each downlink non-low latency traffic frame carries a count indication, and the count indication is used to determine a start moment of the first time period.

In a possible implementation method, the processing unit 1110 is further configured to: when the low latency traffic is present, if a start moment of the first time period is unknown, enter the high power mode, detecting a non-low latency traffic frame, determining the start moment of the first time period based on the non-low latency traffic frame, and enter the low power mode or maintain the high power mode; and enter the high power mode at the start moment of the first time period or before the start moment of the first time period.

In a possible implementation method, the processing unit 1110 is further configured to: when the low latency traffic is present, if a start moment of the first time period is known, enter the low power mode, and enter the high power mode at the start moment of the first time period or before the start moment of the first time period.

In a possible implementation method, the processing unit 1110 is further configured to: when the low latency traffic is present, enter the high power mode, and detect a non-low latency traffic frame; after transmission of the non-low latency traffic frame is completed, preempt a channel to transmit a low latency traffic frame; and after receiving an acknowledgment frame for the low latency traffic frame, enter the low power mode.

For more detailed descriptions about the processing unit 1110 and the transceiver unit 1120, directly refer to related descriptions in the foregoing method embodiments. Details are not described herein again.

A communication apparatus 1200 shown in FIG. 12 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, input data needed by the processor 1210 to run instructions, or data generated after the processor 1210 runs instructions.

When the communication apparatus 1200 is configured to implement the foregoing method embodiments, the processor 1210 is configured to implement the functions of the processing unit 1110, and the interface circuit 1220 is configured to implement the functions of the transceiver unit 1120.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

The method steps in embodiments of this application may be implemented in a hardware manner, or may be implemented in a manner of executing software instructions by the processor. The software instruction may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in the terminal device or the network device. Certainly, the processor and the storage medium may also exist in the access network device or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. The computer program (computer program) is a set of instructions that indicate each step of an electronic computer or another device having a message processing capability, and is usually written in a program design language and run on a target architecture. When the computer program or instructions are loaded and executed on a computer, all or some of the procedures or functions described in embodiments of this application are performed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device in a wireless fidelity Wi-Fi system, wherein the method comprises:
receiving first information, wherein the first information indicates a first time period, and the first time period is time available for high power transmission; and
entering a high power mode in the first time period when low latency traffic is present; or
entering a low power mode or a high power mode in the first time period when low latency traffic is absent.

2. The method according to claim 1, wherein the method further comprises:
entering the high power mode in a second time period after the first time period ends.

3. The method according to claim 2, wherein the method further comprises:
entering the low power mode when a non-low latency traffic frame is detected in the second time period.

4. The method according to claim 3, wherein the method further comprises:
entering the high power mode after transmission of the non-low latency traffic frame is completed.

5. The method according to claim 2, wherein the method further comprises:
maintaining the high power mode when a trigger frame is detected in the second time period and the low latency traffic is present, wherein the trigger frame indicates an uplink transmission resource.

6. The method according to claim 2, wherein the method further comprises:
detecting a trigger frame in the second time period, wherein the trigger frame indicates an uplink transmission resource; and
entering the low power mode for first duration when the low latency traffic is present, but the uplink transmission resource indicated by the trigger frame does not comprise an uplink transmission resource of the terminal device and does not comprise an associated-user contention-based uplink transmission resource; or
entering the low power mode for first duration when the low latency traffic is absent.

7. The method according to claim 6, wherein the first duration is indicated by the trigger frame.

8. The method according to claim 6, wherein the method further comprises:
determining the first duration based on at least one of transmission duration of uplink low latency traffic, an interframe space, and duration of an acknowledgment frame.

9. The method according to any one of claims 6 to 8, wherein after the entering the low power mode for the first duration, the method further comprises:
entering the high power mode and detecting a downlink low latency traffic frame.

10. The method according to claim 9, wherein after the entering the high power mode and detecting the downlink low latency traffic frame, the method further comprises:
maintaining the high power mode when the downlink low latency traffic frame is detected and the downlink low latency traffic frame comprises downlink low latency traffic of the terminal device;
entering the low power mode when the downlink low latency traffic frame is detected and the downlink low latency traffic frame does not comprise downlink low latency traffic of the terminal device; or
entering the low power mode when no downlink low latency traffic frame is detected.

11. The method according to claim 2, wherein the method further comprises:
detecting a trigger frame in the second time period, wherein the trigger frame indicates an uplink transmission resource; and
when the low latency traffic is present, but the uplink transmission resource indicated by the trigger frame does not comprise an uplink transmission resource of the terminal device and comprises an associated-user contention-based uplink transmission resource, maintaining the high power mode and contending for use of the associated-user contention-based uplink transmission resource to transmit the low latency traffic.

12. The method according to claim 2, wherein the method further comprises:
maintaining the high power mode when a downlink low latency traffic frame is detected in the second time period and the downlink low latency traffic frame comprises downlink low latency traffic of the terminal device.

13. The method according to claim 2, wherein the method further comprises:
entering the low power mode for second duration when a downlink low latency traffic frame is detected in the second time period and the downlink low latency traffic frame does not comprise downlink low latency traffic of the terminal device.

14. The method according to claim 13, wherein the second duration is determined based on remaining transmission duration of the downlink low latency traffic frame and an interframe space.

15. The method according to claim 1, wherein the method further comprises:
entering the high power mode before a non-low latency traffic frame arrives.

16. The method according to claim 15, wherein the method further comprises:
maintaining the high power mode if the non-low latency traffic frame is detected and transmission duration of the non-low latency traffic frame is less than a first threshold.

17. The method according to any one of claims 1 to 16, wherein different downlink non-low latency traffic frames have equal duration.

18. The method according to any one of claims 1 to 17, wherein each downlink non-low latency traffic frame carries a count indication, and the count indication is used to determine a start moment of the first time period.

19. The method according to claim 1, wherein the method further comprises:
when the low latency traffic is present, if a start moment of the first time period is unknown, entering the high power mode, detecting a non-low latency traffic frame, determining the start moment of the first time period based on the non-low latency traffic frame, and entering the low power mode or maintaining the high power mode; and
entering the high power mode at the start moment of the first time period or before the start moment of the first time period.

20. The method according to claim 1, wherein the method further comprises:
when the low latency traffic is present, if a start moment of the first time period is known, entering the low power mode, and entering the high power mode at the start moment of the first time period or before the start moment of the first time period.

21. The method according to claim 1, wherein the method further comprises:
when the low latency traffic is present, entering the high power mode, and detecting a non-low latency traffic frame;
after transmission of the non-low latency traffic frame is completed, preempting a channel to transmit a low latency traffic frame; and
after receiving an acknowledgment frame for the low latency traffic frame, entering the low power mode.

22. A communication apparatus, comprising a module configured to perform the method according to any one of claims 1 to 21.

23. A communication apparatus, comprising a processor and an interface circuit, wherein the processor is configured to communicate with another apparatus through the interface circuit, and perform the method according to any one of claims 1 to 21.

24. A computer program product, wherein the computer program product comprises instructions, and when the instructions are run on a processor, the processor is enabled to perform the method according to any one of claims 1 to 21.

25. A computer-readable storage medium, wherein the storage medium stores a computer program or instructions, and when the computer program or the instructions are executed by a communication apparatus, the method according to any one of claims 1 to 21 is implemented.
